# EUROPEAN PATENT APPLICATION

(11) **EP 4 387 056 A1**
(43) Date of publication of application: **19.06.2024**
(21) Application number: 22213552.7
(22) Date of filing: 14.12.2022
(51) Int. Cl.: H02K 1/276

(54) **PERMANENT MAGNET ROTOR FOR AN ELECTRIC MACHINE**

(71) Applicant: Valeo Systèmes d'Essuyage, 78322 Le Mesnil Saint Denis (FR)
(72) Inventor: HERRADA, Jose Luis, 78322 LE MESNIL SAINT DENIS (FR); ZAPIOR, Pawel, 78322 LE MESNIL SAINT DENIS (FR)
(74) Representative: Valeo Visibility

(57) **Abstract**

The present invention relates to a permanent magnet rotor for an electric machine, comprising: a shaft rotatable about a rotating axis; a plurality of permanent magnets; a rotor core comprising a lamination stack having a plurality of rotor laminations comprising two extremal rotor laminations and a plurality of intermediate rotor laminations arranged in between the two extremal rotor laminations. Further, each rotor lamination of the plurality of rotor laminations comprises a plurality of magnet apertures therein arranged so that to form together a plurality of magnet housings. The plurality of rotor laminations comprises one retaining rotor lamination, which is one of the two extremal rotor laminations, and the plurality of magnet apertures of the one retaining rotor lamination has a dimension different from a dimension of corresponding magnet apertures of remaining rotor laminations of the lamination stack.

## Description

### TECHNICAL FIELD

The present invention relates to a permanent magnet rotor for an electric machine, and to an electric machine having such a rotor, and to a vehicle having such an electric machine.

### STATE OF THE ART

Electric machines having permanent magnet rotors are known in the art. A permanent magnet rotor include a rotor shaft and a rotor core assembly mounted on the rotor shaft. The rotor core assembly includes a lamination stack having a plurality of laminations stacked on top of one another. Further, the lamination stack includes a plurality of magnet insertion holes into which permanent magnets are inserted. When the rotor is being rotated, each permanent magnet may be exposed to centrifugal force and vibration, and thereby the permanent magnets may come out of the magnet insertion holes. To prevent the permanent magnets from coming out of the magnet insertion holes, in some conventional permanent magnet rotors, a resin is inserted between each permanent magnet and corresponding magnet insertion hole so as to fix the permanent magnet therein. Alternatively, in some conventional permanent magnet rotors, gluing is performed to hold the permanent magnets in place. However, the process of gluing is costly and includes several process steps, thereby raising the production cost thereof. Further, with the gluing, it is not possible to recycle the permanent magnets. When the permanent magnets are not securely held in respective magnet insertion holes, it may be possible that the permanent magnets may overpass the lamination stack if the retaining force is not sufficient to retain the permanent magnets in the respective magnet insertion holes. Hence, it is necessary to devise a technique to securely retain the permanent magnets in respective magnet insertion holes of the permanent magnet rotor.

### SUMMARY OF THE INVENTION

An object of the present invention is to alleviate the problems raised above. To be more precise, an object of the present invention is to provide an economical way to retain permanent magnets inside respective magnet housings or respective magnet insertion holes of a permanent magnet rotor.

Another object of the present invention is to provide a permanent magnet rotor in which movement of permanent magnets received inside the respective magnet housings can be prevented so that permanent magnets cannot overpass a lamination stack of the permanent magnet rotor.

To achieve these objectives, the present invention provides a permanent magnet rotor for an electric machine, comprising: a shaft rotatable about a rotating axis; a rotor core comprising a lamination stack having a plurality of rotor laminations mounted on the shaft in stacked relation for rotation therewith, wherein the plurality of rotor laminations comprises two extremal rotor laminations and a plurality of intermediate rotor laminations arranged in between the two extremal rotor laminations; wherein each of the plurality of rotor laminations comprises a plurality of magnet apertures therein arranged so that to form together a plurality of magnet housings; a plurality of permanent magnets configured to be inserted into the respective magnet housings; wherein the plurality of rotor laminations comprises at least one retaining rotor lamination configured to retain at least one permanent magnet of the plurality of permanent magnets inside at least one magnet housing of the plurality of magnet housings; and wherein the at least one retaining rotor lamination is one of the two extremal rotor laminations, and the plurality of magnet apertures of the at least one retaining rotor lamination has a dimension different from a dimension of corresponding magnet apertures of remaining rotor laminations of the lamination stack. Advantageously, the at least one retaining rotor lamination facilitates to retain the plurality of permanent magnets inside the plurality of magnet housings without using any additional components or tools.

According to one characteristic of the present invention, the plurality of magnet apertures of the at least one retaining rotor lamination has a smaller length dimension and/or a width dimension than the corresponding magnet apertures of the remaining rotor laminations. Advantageously, in the present invention, one or more dimensions of the magnet apertures of the at least one retaining rotor lamination are changed so as to securely retain the permanent magnets inside respective magnet housing. Hence, the present invention provides an economical way to retain the plurality of permanent magnets inside the respective magnet housings of the permanent magnet rotor.

According to one characteristic of the present invention, at least one of the two extremal rotor laminations is configured to prevent a movement of the at least one permanent magnet, received inside respective magnet housings, in the direction of insertion of the at least one permanent magnet. Advantageously, by preventing the movement of the permanent magnets, interaction of the permanent magnets with other components of the permanent magnet rotor can be avoided. Hence, preventing the damage of the permanent magnet rotor and/ or the other components of the permanent magnet rotor.

According to one characteristic of the present invention, the at least one retaining rotor lamination further comprises one or more of the plurality of intermediate rotor laminations which comprises at least one leg extending from an inner side surface of the at least one magnet aperture of the one or more of the plurality of intermediate rotor laminations.

According to one characteristic of the present invention, the at least one leg is configured to be deformed to prevent the movement of the at least one permanent magnet in a direction opposite to the direction of the insertion of the at least one permanent magnet received inside the at least one magnet housing.

According to one characteristic of the present invention, the at least one magnet aperture of the at least one retaining rotor lamination has a length dimension smaller than a length dimension of the at least one permanent magnet.

According to one characteristic of the present invention, the at least one of the two extremal rotor laminations comprises a retaining means configured to retain the at least one permanent magnet.

According to one characteristic of the present invention, the retaining means comprises one or more retaining protrusions extending from an inner side surface of the at least one magnet aperture of a corresponding extremal rotor lamination.

According to one characteristic of the present invention, the at least one permanent magnet comprises one or more indentations configured to cooperate with the one or more retaining protrusions.

According to one characteristic of the present invention, the retaining means comprises at least one indentation formed inside the at least one magnet aperture of the at least one of the two extremal rotor laminations.

According to one characteristic of the present invention, the at least one permanent magnet comprises at least one protrusion configured to cooperate with the at least one indentation.

According to one characteristic of the present invention, each magnet housing of the plurality of magnet housings extends from a first extremal rotor lamination to a second extremal rotor lamination through the plurality of intermediate rotor laminations, wherein a height dimension of each magnet housing is larger than a height dimension of each permanent magnet of the at least one permanent magnet.

According to one characteristic of the present invention, each rotor lamination of the plurality of rotor laminations comprises between 4 to 20 magnet apertures, preferably 14 magnet apertures.

According to one characteristic of the present invention, each permanent magnet of the at least one permanent magnet has a height dimension smaller than a stack axial length of the rotor core.

According to one characteristic of the present invention, the present invention also relates to an electric machine comprising a stator and a permanent magnet rotor as has just been presented.

According to one characteristic of the present invention, the electric machine is a motor.

According to one characteristic of the present invention, the present invention also relates to a vehicle comprising the electric machine as has just been presented.

According to one characteristic of the present invention, the vehicle is a two-wheeled vehicle or a four-wheeled vehicle.

Further advantages, features and details of the invention will be apparent from the following description of preferred embodiments of the invention and from the drawings.

### BRIEF DESCRIPTION OF THE INVENTION

To complete the description and to provide a better understanding of the invention, a set of drawings is provided. Said drawings form an integral part of the description and illustrate an embodiment of the invention, which should not be construed as restricting the scope of the invention, but only as an example of how the invention can be carried out. The drawings comprise the following characteristics.
Fig. 1 shows a perspective view showing a permanent magnet rotor, according to an embodiment of the present invention.
Fig.2a shows a sectional view of a portion of a permanent magnet rotor shown in the Fig.1, without permanent magnets, according to an embodiment of the present invention.
Fig.2b shows a perspective view of a permanent magnet of a permanent magnet rotor, according to an embodiment of the present invention.
Fig.2c shows a sectional view of a portion of a permanent magnet rotor shown in the Fig.1, with permanent magnets, according to an embodiment of the present invention.
Fig.2d shows a sectional view of a portion of a permanent magnet rotor shown in the Fig.1, with permanent magnets, according to another embodiment of the present invention.
Fig.3a shows a perspective view of a permanent magnet of a permanent magnet rotor, according to an exemplary embodiment of the present invention.
Fig.3b shows a perspective view of a permanent magnet of a permanent magnet rotor, according to another exemplary embodiment of the present invention.
Fig.3c shows a perspective view of a permanent magnet of a permanent magnet rotor, according to another exemplary embodiment of the present invention.
Fig.4 shows a sectional view of a portion of a permanent magnet rotor shown in the Fig.1, without permanent magnets, according to another embodiment of the present invention.

### DETAILED DESCRIPTION OF THE INVENTION

The description set forth below in connection with the appended drawings is intended as a description of various embodiments of the disclosed subject matter and is not necessarily intended to represent the only embodiment(s). In certain instances, the description includes specific details for the purpose of providing an understanding of the disclosed subject matter. However, it will be apparent to those skilled in the art that embodiments may be practiced without these specific details. In some instances, well known structures and components may be shown in block diagram form in order to avoid obscuring the concepts of the disclosed subject matter.

Reference throughout the specification to "one embodiment" or "an embodiment" means that a particular feature, structure, characteristic, operation, or function described in connection with an embodiment is included in at least one embodiment of the disclosed subject matter. Thus, any appearance of the phrases "in one embodiment" or " in an embodiment" in the specification is not necessarily referring to the same embodiment. Further, the particular features, structures, characteristics, operations, or functions may be combined in any suitable manner in one or more embodiments. Further, it is intended that embodiments of the disclosed subject matter can and do cover modifications and variations of the described embodiments.

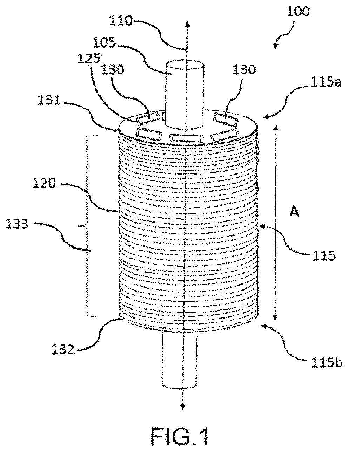

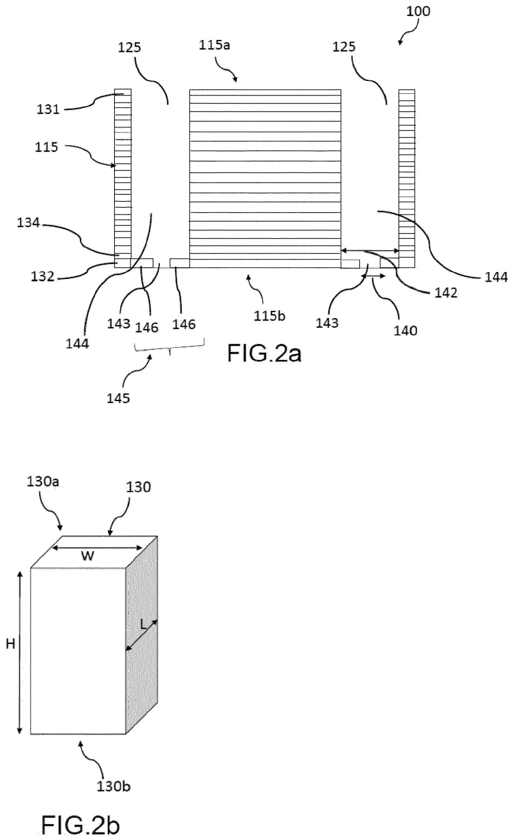

Fig. 1 shows a perspective view showing a permanent magnet rotor, according to an embodiment of the present invention.Fig.2a shows a sectional view of a portion of a permanent magnet rotor shown in the Fig.1, without permanent magnets, according to an embodiment of the present invention. Fig.2b shows a perspective view of a permanent magnet of a permanent magnet rotor, according to an embodiment of the present invention.

Referring to the Fig.1, a permanent magnet rotor 100 for an electric machine (not shown in figures) is illustrated. For instance, the electric machine is a motor. The electric machine comprises the permanent magnet rotor 100 shown in the Fig.1 and a stator (not shown in Figures) assembled with the permanent magnet rotor 100. The permanent magnet rotor 100 comprises a shaft 105 extending along a rotation axis 110. The permanent magnet rotor 100 further comprises a rotor core 115 extending between a first end 115a and a second end 115b opposite to the first end 115a. The rotor core 115 has a lamination stack comprising a plurality of circular steel plates, which are also referred as a plurality of rotor laminations, referred by a single reference numeral 120, for the purpose of brevity. By way of an example, and not limitation, a number of plurality of rotor laminations 120 of the lamination stack may be in the range between 70 to 150, preferably between 80 to 100. The plurality of rotor laminations 120 are made of a magnetically permeable material and lined up one after the other in stacked relation in an axial direction of the rotor core 115. Each rotor lamination of the plurality of rotor laminations 120 has a through opening for introducing the shaft 105. The plurality of rotor laminations 120 comprises a circumferential array of a plurality of magnet housings 125 extending from the first end 115a to the second end 115b in the axial direction, as shown in the Fig.1. Each rotor lamination of the plurality of rotor laminations comprises a plurality of magnet apertures (not shown in Fig.1) therein arranged so that to form together the plurality of magnet housings 125. In an aspect, each rotor lamination of the plurality of rotor laminations 120 comprises between 4 to 20 magnet apertures, preferably 14 magnet apertures.

Further, the permanent magnet rotor 100 comprises a plurality of permanent magnets 130 configured to be inserted into the plurality of magnet housings 125. By way of an example, and not limitation, each permanent magnet of the plurality of magnets 130 may be of a cuboid shaped or a sector shaped having a first end 130a and a second end 130b opposite to the first end 130a, and having length L, width W, and height H, as shown in the Fig.2b. The overall permanent magnet rotor 100 arrangement is constructed so that circumferentially adjacent permanent magnets 130 define alternating North and South poles of the permanent magnet rotor 100.

The plurality of rotor laminations 120 comprises at least one retaining rotor lamination, which is configured to retain at least one permanent magnet of the plurality of permanent magnets 130 inside respective magnet housings 125. In addition, the permanent magnet rotor 100 may comprise end plates (not shown in Figures) disposed on both ends of the rotor core 115. For instance, the end plates are connected to the rotor core 115 by rivets.

The plurality of rotor laminations 120 comprises two extremal rotor laminations 131, 132 and a plurality of intermediate rotor laminations 133 arranged in between the two extremal rotor laminations 131, 132. For instance, a first extremal rotor lamination 131 of the two extremal rotor laminations 131, 132 may be located closer to the first end 115a of the rotor core 115 and a second extremal rotor lamination 131 of the two extremal rotor laminations 131, 132 may be located closer to the second end 115b of the rotor core 115. The first extremal rotor lamination 131 may also be a referred as a first lamination, i.e., the lamination on the top of the lamination stack, and the second extremal rotor lamination 132 may also be referred as a last lamination, i.e., the lamination on the bottom of the lamination stack. Each permanent magnet housing of the plurality of magnet housings 125 extends from the first extremal rotor lamination 131 to the second extremal rotor lamination 132 through the plurality of intermediate rotor laminations 133.

Further, in one aspect, a height dimension of each magnet housing of the plurality of magnet housings 125 is larger than a height dimension of each permanent magnet of the plurality of permanent magnets 130. Further, in another aspect, the height dimension of each magnet housing of the plurality of magnet housings 125 is substantially same as the height dimension of each permanent magnet of the plurality of permanent magnets 130.

In an aspect, each permanent magnet of the plurality of permanent magnets 130 has a height dimension smaller than a stack axial length A (shown in the Fig.1) of the rotor core 115.

In one embodiment, the at least one retaining rotor lamination is at least one of the two extremal rotor laminations 131, 132. In one example, the at least one retaining rotor lamination is the second extremal rotor lamination 132, i.e., the last lamination. In another example, the at least one retaining rotor lamination incudes two or more rotor laminations that are adjacent to each other in the axial direction and located closer to the second end 115b of the rotor core 115. According to this embodiment, the at least one retaining rotor lamination is configured to block the movement of the plurality of magnets 130, which are received inside the plurality of magnet housings 125, in the direction of the insertion of the plurality of magnets 130.

In another embodiment, the at least one retaining rotor lamination comprises at least one of the two extremal rotor laminations 131, 132, for example, the last lamination 132; and one or more of the plurality of intermediate rotor laminations 133. According to this embodiment, the at least one of the two extremal rotor laminations, for example, the last lamination 132, is configured to block the movement of the plurality of magnets 130, which are received inside the plurality of magnet housings 125, in the direction of the insertion of the plurality of magnets 130. Further, the one or more of the plurality of intermediate rotor laminations which also acts as the at least one retaining rotor lamination are configured to block the movement of the plurality of magnets 130, which are received inside the plurality of magnet housings 125, in a direction opposite to the direction of the insertion of the plurality of magnets 130.

Fig.2a shows a sectional view of a portion of a permanent magnet rotor shown in the Fig.1, without permanent magnets, according to an embodiment of the present invention. As can be seen from the Fig.2a, the plurality of magnet apertures 143 of the at least one retaining rotor lamination, for example, the last lamination 132, has a dimension different from a dimension of corresponding magnet apertures 144 of remaining rotor laminations of the rotor core 115. In an aspect, the plurality of magnet apertures 143 of the at least one retaining rotor lamination has a length dimension 140 and/or a width dimension smaller than a length dimension 142 and/or a width dimension of corresponding magnet apertures 144 of the remaining rotor laminations of the rotor core 115.

In one exemplary embodiment shown in the Fig.2a, a magnet aperture 143 of the last lamination 132, i.e., the second extremal rotor lamination has the length dimension smaller than the corresponding magnet apertures 144 of the remaining rotor laminations of the rotor core 115. In another example, the plurality of magnet apertures 143 of the two or more rotor laminations 132, 134 that are adjacent to each other in the axial direction and located closer to the second end 115b of the rotor core 115 may have the smaller length dimension than the corresponding magnet apertures 144 of the remaining rotor laminations of the rotor core 115.

In an aspect, one of the two extremal rotor laminations 131, 132, for example, the last lamination 132 comprises a retaining means 145 configured to retain the at least one permanent magnet 130. In an example, the retaining means 145 comprises one or more retaining protrusions 146 extending from an inner side surface of the at least one magnet aperture of a corresponding extremal rotor lamination. In another example, the retaining means 145 comprises one or more indentations (not shown in Figures) formed inside the at least one magnet aperture of a corresponding extremal rotor lamination.

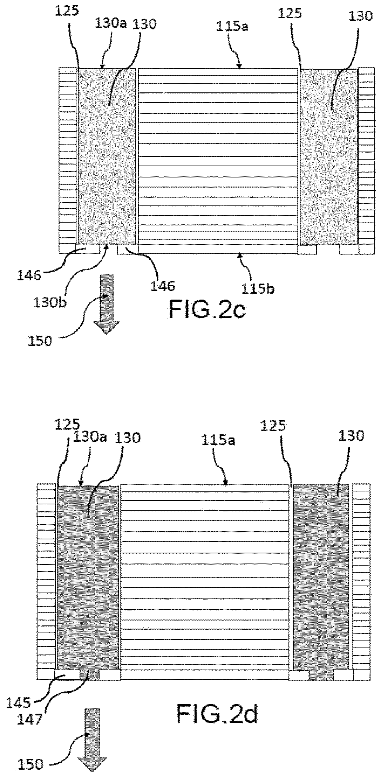

Fig.2c shows a sectional view of a portion of a permanent magnet rotor shown in the Fig.1, with permanent magnets, according to an embodiment of the present invention. When the plurality of magnets 130 are inserted into the plurality of magnet housings 125, the first end 130a of each permanent magnet 130 is configured to be aligned with the first end 115a of the rotor core 115 and the second end 115b is configured to cooperate with the at least one retaining rotor lamination, for example, the last lamination 131. As can be seen from the Fig.2c, the first ends 130a of the permanent magnets 130 are aligned with the first end 115a of the rotor core 115 when the permanent magnets 130 are inserted inside the respective magnet housings 125. Further, the second end 130b of the permanent magnets abut the retaining means 145 of the last lamination so as to block the movement of the permanent magnets in the direction of insertion 150.

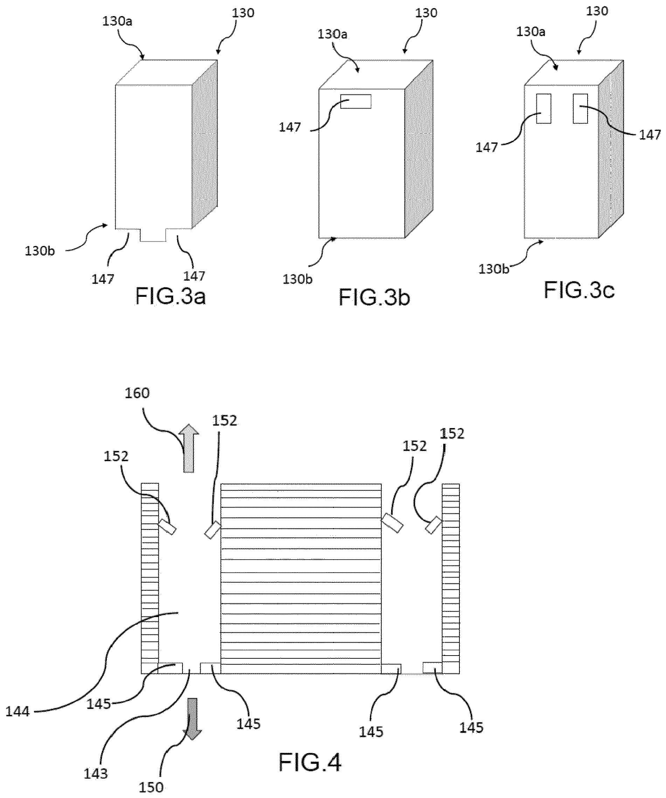

Fig.2d shows a sectional view of a portion of a permanent magnet rotor shown in the Fig.1, with permanent magnets, according to another embodiment of the present invention. Fig.3a, Fig.3b and Fig.3c shows perspective views of a permanent magnet of a permanent magnet rotor, according to different exemplary embodiments of the present invention. In an aspect, a shape of each permanent magnet 130, for example, at the second end 130b, is shaped to cooperate with the at least one retaining rotor lamination so as to retain the at least one permanent magnet 130 in respective magnet housings 125. As shown in the Fig.3a, in one example, the permanent magnets may be formed with one or more indentations 147 at the second end. Referring back to the Fig.2d, the permanent magnets of type shown in the Fig.3a are inserted into each magnet housing of the plurality of magnet housings 125 so that the first ends 130a of the permanent magnets 130 are aligned with the first end 115a of the rotor core 115. Further, the one or more indentations 147 of the permanent magnets cooperate with one or more retaining protrusions 146 of the retaining means 145 of the last lamination 132, so as to block the movement of the magnets in the direction of the insertion 150.

According to other exemplary embodiment, the permanent magnets of type shown in the Fig.3b or in the Fig.3c may be inserted into each permanent magnet housing of the plurality of magnet housings 125 so as to retain the permanent magnets 130 inside the respective magnet housings 125.

Fig.4 shows a sectional view of a portion of a permanent magnet rotor shown in the Fig.1, without permanent magnets, according to another embodiment of the present invention. As previously indicated, according to another embodiment, the at least one retaining rotor lamination comprises: the at least one of the two extremal rotor laminations 131, 132, for example, the last lamination 132; and the one or more of the plurality of intermediate rotor laminations 133. As can be seen from the Fig.4, the magnet aperture 143 of the last lamination 132 has the length dimension smaller than the length dimension of the magnet apertures 144 of the remaining lamination of the rotor core 115. Further, as can be seen from the Fig.4, the one or more of the plurality of intermediate rotor laminations 133 comprises at least one leg 152 extending from an inner side surface of the at least one magnet aperture of the one or more of the plurality of intermediate rotor laminations 133. Each of the at least one leg 152 is configured to be deformed during the insertion of the permanent magnets 130 and once the magnets are inserted inside the respective magnet housings, the at least one leg prevents the movement of the corresponding permanent magnets in the direction 160 opposite to the direction 150 of the insertion of the permanent magnets 130. With the configuration shown in the Fig.4, the force required to move the permanent magnets 130 in the direction 150 of insertion of the permanent magnets 130 is lower than the force required to move the permanent magnets 130 in a direction 160 opposite to the direction of insertion of the permanent magnets 130.

Advantageously, the present invention provides an economical way to retain the plurality of permanent magnets 125 inside the respective magnet housings 130 of the permanent magnet rotor 100. Further, by using the at least one retaining rotor lamination, the movement of the permanent magnets 130 received inside the respective magnet housings 125 can be prevented so that permanent magnets 130 cannot overpass the lamination stack of the permanent magnet rotor 100. Additionally, with the present invention, the plurality of permanent magnets 125 can be easily removed from the respective magnet housings 130.

The person skilled in the art realizes that the present invention by no means is limited to the preferred embodiments described above. On the contrary, many modifications and variations are possible within the scope of the appended claims. In addition, the skilled person readily realizes that the different embodiments described herein may be combined freely to obtain new combinations.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantages.

### LIST OF REFERENCE SIGNS

- 100: permanent magnet rotor
- 105: rotor shaft
- 110: rotation axis
- 115: rotor core
- 115a: first end of rotor core
- 115b: second end of rotor core
- 120: plurality of rotor laminations
- 125: permanent magnet housings
- 130: permanent magnets
- 130a: first end of permanent magnet
- 130b: second end of permanent magnet
- 131: first extremal rotor lamination
- 132: last lamination or second extremal rotor lamination
- 133: plurality of intermediate rotor laminations
- 140: length dimension of a magnet aperture of last lamination
- 142: length dimension of magnet apertures of remaining lamina
- 143: magnet aperture of last lamination
- 144: magnet aperture of remaining rotor lamination
- 145: retaining means
- 146: retaining protrusions
- 147: indentation of permanent magnet
- 150: direction of insertion of permanent magnets
- 152: legs of one or more of the intermediate laminations
- 160: direction opposite to a direction of insertion of permanent magnets

## Claims

1. A permanent magnet rotor (100) for an electric machine, comprising:
a shaft (105) rotatable about a rotating axis;
a rotor core (115) comprising a lamination stack having a plurality of rotor laminations (120) mounted on the shaft (105) in stacked relation for rotation therewith, wherein the plurality of rotor laminations (120) comprises two extremal rotor laminations (131, 132) and a plurality of intermediate rotor laminations (133) arranged in between the two extremal rotor laminations (131, 132);
wherein each of the plurality of rotor laminations (120) comprises a plurality of magnet apertures therein arranged so that to form together a plurality of magnet housings (125);
a plurality of permanent magnets (130) configured to be inserted into the respective magnet housings (125);
wherein the plurality of rotor laminations (120) comprises at least one retaining rotor lamination configured to retain at least one permanent magnet of the plurality of permanent magnets (130) inside at least one magnet housing of the plurality of magnet housings (125); and
wherein the at least one retaining rotor lamination is one of the two extremal rotor laminations (131, 132), and the plurality of magnet apertures of the at least one retaining rotor lamination has a dimension different from a dimension of corresponding magnet apertures of remaining rotor laminations of the lamination stack.

2. The permanent magnet rotor (100) as claimed in claim 1, wherein the plurality of magnet apertures of the at least one retaining rotor lamination has a smaller length dimension and/or a width dimension than the corresponding magnet apertures of the remaining rotor laminations.

3. The permanent magnet rotor (100) as claimed in claims 1 to 2, wherein at least one of the two extremal rotor laminations (131, 132) is configured to prevent a movement of the at least one permanent magnet (130), received inside respective magnet housings (125), in the direction of insertion of the at least one permanent magnet (130).

4. The permanent magnet rotor (100) as claimed in any one of preceding claims, wherein the at least one retaining rotor lamination further comprises one or more of the plurality of intermediate rotor laminations (133) which comprises at least one leg (152) extending from an inner side surface of the at least one magnet aperture of the one or more of the plurality of intermediate rotor laminations (133).

5. The permanent magnet rotor (100) as claimed in claim 4, wherein the at least one leg (152) is configured to be deformed to prevent the movement of the at least one permanent magnet (130) in a direction opposite to the direction of the insertion of the at least one permanent magnet (130) received inside the at least one magnet housing (130).

6. The permanent magnet rotor (100) as claimed in any one of preceding claims, wherein the at least one magnet aperture of the at least one retaining rotor lamination has a length dimension smaller than a length dimension of the at least one permanent magnet (130).

7. The permanent magnet rotor (100) as claimed in any one of preceding claims 3 to 6, wherein the at least one of the two extremal rotor laminations (131, 132) comprises a retaining means (145) configured to retain the at least one permanent magnet (130).

8. The permanent magnet rotor (100) as claimed in claim 7, wherein the retaining means (145) comprises one or more retaining protrusions (146) extending from an inner side surface of the at least one magnet aperture of a corresponding extremal rotor lamination.

9. The permanent magnet rotor (100) as claimed in claim 7 and claim 8, wherein the at least one permanent magnet (130) comprises one or more indentations (147) configured to cooperate with the one or more retaining protrusions (146).

10. The permanent magnet rotor (100) as claimed in claim 7, wherein the retaining means (145) comprises at least one indentation formed inside the at least one magnet aperture of the at least one of the two extremal rotor laminations (131, 132).

11. The permanent magnet rotor (100) as claimed in claim 7 and claim 10, wherein the at least one permanent magnet (130) comprises at least one protrusion configured to cooperate with the at least one indentation.

12. The permanent magnet rotor (100) as claimed in any one of preceding claims, wherein each magnet housing of the plurality of magnet housings (125) extends from a first extremal rotor lamination (131) to a second extremal rotor lamination (132) through the plurality of intermediate rotor laminations (133), wherein a height dimension of each magnet housing (125) is larger than a height dimension of each permanent magnet (125) of the at least one permanent magnet (130).

13. The permanent magnet rotor (100) as claimed in any one of preceding claims, wherein each rotor lamination of the plurality of rotor laminations (120) comprises between 4 to 20 magnet apertures, preferably 14 magnet apertures.

14. The permanent magnet rotor (100) as claimed in any one of preceding claims, wherein each permanent magnet (130) of the at least one permanent magnet has a height dimension smaller than a stack axial length (A) of the rotor core (115).

15. An electric machine comprising a stator and a permanent magnet rotor (100) as claimed in the preceding claims 1 to 14.
